# EUROPÄISCHE PATENTSCHRIFT

(11) **EP 2 043 815 B1**
(45) Veröffentlichungstag und Bekanntmachung des Hinweises auf die Patenterteilung: **19.01.2011**
(21) Anmeldenummer: 07728900.7
(22) Anmeldetag: 08.05.2007
(51) Int. Cl.: B23Q 11/00

(54) **STAUBABSAUGADAPTERVORRICHTUNG**
DUST SUCTION ADAPTER DEVICE
DISPOSITIF DE RACCORDEMENT POUR L'ASPIRATION DES POUSSIÈRES

(30) Priorität: 07.07.2006 DE 102006031507
(43) Veröffentlichungstag der Anmeldung: 08.04.2009
(73) Patentinhaber: Robert Bosch GmbH, 70442 Stuttgart (DE)
(72) Erfinder: JORDAN, Peter, 70771 Leinfelden-Echterdingen (DE); BAUMANN, Otto, 70771 Leinfelden-Echterdingen (DE); DAMMERTZ, Ralph, Mt. Prospect, Illinois 60056 (US); RENZ, Werner, 31033 Brueggen (DE); BERNHARDT, Thomas, 72631 Aichtal-Groetzingen (DE); SCHMID, Hardy, 70563 Stuttgart (DE); DI NICOLANTONIO, Aldo, 4565 Recherswil (CH); HOSSMANN, Daniela, 70771 Leinfelden-Echterdingen (DE); LENNARTZ, Juergen, 73760 Ostfildern (DE)
(86) Internationale Anmeldenummer: PCT/EP2007/054447
(87) Internationale Veröffentlichungsnummer: WO 2008/003544

(56) Entgegenhaltungen:
- EP-A1- 0 377 100
- EP-A1- 1 459 841
- EP-A1- 1 604 777
- WO-A-95/20440
- US-A- 5 033 917

## Beschreibung

### Stand der Technik

Die Erfindung geht aus von einer Staubabsaugadaptervorrichtung nach dem Oberbegriff des Anspruchs 1, wie z.B. aus der WO 95/20440 bekannt.

Aus der EP 1 459 841 A1 ist eine Staubabsaugadaptervorrichtung bekannt, die eine Grundkörpereinheit aufweist, die über eine Koppelstelle an eine Handwerkzeugmaschine ankoppelbar ist. Die Grundkörpereinheit weist einen Absaugkanal, eine Filtereinheit, einen Lüfter und einen Lüftermotor auf. Ferner ist an der Grundkörpereinheit eine Saugkopfeinheit beweglich angeordnet.

### Vorteile der Erfindung

Die Erfindung geht aus von einer Staubabsaugadaptervorrichtung mit einer Grundkörpereinheit, die eine Koppelstelle zur Ankopplung an eine Handwerkzeugmaschine und wenigstens einen Absaugkanal aufweist, und einer an der Grundkörpereinheit beweglichen Saugkopfeinheit.

Es wird vorgeschlagen, dass die Staubabsaugadaptervorrichtung wenigstens eine Schnittstelle für eine externe Saugeinheit aufweist, wodurch vorteilhaft eine hohe Saugleistung an der Saugkopfeinheit der Staubabsaugadaptervorrichtung erreicht werden kann. Die Staubabsaugadaptervorrichtung wird vorzugsweise bei Handwerkzeugmaschinen, wie insbesondere Bohrhämmern, eingesetzt, so dass durch die externe Saugeinheit bzw. die erhöhte Saugleistung vorteilhaft ein staubfreies Bohren, wie insbesondere in bewohnten Räumen, in Laborräumen etc., erreicht werden kann. In diesem Zusammenhang soll unter einer "externen Saugeinheit" eine Saugeinheit verstanden werden, die eine Saugleistung unabhängig von einer Antriebseinheit der Staubabsaugadaptervorrichtung und/oder unabhängig von einer Antriebseinheit der mit der Staubabsaugadaptervorrichtung gekoppelten Handwerkzeugmaschine erzeugt. Unter einer "Schnittstelle für eine externe Saugeinheit" soll hierbei eine Schnittstelle verstanden werden, an die insbesondere ein Absaugschlauch und/oder ein Absaugrohr der externen Saugeinheit gekoppelt werden kann. Zudem kann durch die externe Saugeinheit vorteilhaft eine Staubauffangkapazität erhöht werden, indem die externe Saugeinheit eine Staubauffangvorrichtung umfasst. Zusätzlich können beispielsweise bei einer Staubabsaugung mit der Staubabsaugadaptervorrichtung und der externen Saugeinheit in der Staubauffangvorrichtung der externen Saugeinheit Filtermittel mit einem höheren Abscheidegrad eingesetzt werden, wie dies insbesondere bei Arbeiten mit gesundheitsschädlichen Werkstoffen, wie beispielsweise Asbest, besonders vorteilhaft ist. Die Schnittstelle für die externe Saugeinheit kann hierbei an der Saugkopfeinheit, am Absaugkanal und/oder an der Grundkörpereinheit angeordnet sein.

Des Weiteren wird vorgeschlagen, dass die Grundkörpereinheit die Schnittstelle für die externe Saugeinheit umfasst, wodurch an der Schnittstelle eine besonders stabile Kopplung zwischen der externen Saugeinheit und der Staubauffangvorrichtung erreicht werden kann. Vor allem kann dadurch eine Ausrichtung der Saugkopfeinheit bzw. des Absaugkanals von der Kopplung an die externe Saugeinheit unbeeinflusst bleiben.

In einer weiteren Ausgestaltung der Erfindung wird vorgeschlagen, dass die Staubabsaugadaptervorrichtung ein Adapterelement umfasst, das die Schnittstelle für die externe Saugeinheit aufweist, wodurch eine Flexibilität der Staubabsaugadaptervorrichtung für einen Bediener vorteilhaft erhöht werden kann. Ein Bediener einer Handwerkzeugmaschine mit einer Staubabsaugadaptervorrichtung kann hierbei bei Bedarf das Adapterelement mit der Schnittstelle für die externe Saugeinheit jederzeit ein- oder ausbauen.

Vorteilhafterweise umfasst die Grundkörpereinheit einen Aufnahmebereich, der zu einer Aufnahme des Adapterelements vorgesehen ist, wodurch eine stabile Ausführung der Staubabsaugadaptervorrichtung erreicht und eine Bedienerfreundlichkeit der Staubabsaugadaptervorrichtung erhöht werden kann. Weitere Bauteile, Bauraum, Montageaufwand und Kosten können vorteilhaft eingespart werden, wenn die Grundkörpereinheit einen Aufnahmebereich für ein Adapterelement umfasst, der sowohl zur Aufnahme des Adapterelements für die externe Saugeinheit als auch zur Aufnahme für ein Adapterelement vorgesehen ist, das ein Filtermittel aufweist und für eine interne Staubabsaugung vorgesehen ist.

Zudem kann eine besonders schnelle und werkzeuglose Aufnahme des Adapterelements in dem Aufnahmebereich erzielt werden, wenn der Aufnahmebereich ein Rastmittel aufweist, das zum Einrasten des Adapterelements vorgesehen ist. Ist zusätzlich an die Rastelemente ein Betätigungselement zu einem einfachen Lösen einer Rastverbindung angeordnet, so kann ein konstruktiv einfacher, vorzugsweise werkzeugloser und insbesondere ein einhändiger Wechsel unterschiedlicher Adapterelemente für einen Bediener einer Handwerkzeugmaschine mit einer Staubabsaugadaptervorrichtung erreicht werden.

Eine konstruktiv einfache Kopplung der externen Saugeinheit, insbesondere eines Saugschlauchs der externen Saugeinheit, kann erreicht werden, wenn ein Koppelmittel der Schnittstelle eine runde Querschnittsfläche aufweist, wobei das Koppelmittel zylindrisch und/oder konisch ausgeführt sein kann, wodurch dasselbe insbesondere mit Koppelmitteln der externen Saugeinheit mit unterschiedlichen Durchmessern gekoppelt werden kann.

Ferner ist es vorteilhaft, wenn das Koppelmittel der Schnittstelle wenigstens ein Rastmittel aufweist, wodurch eine konstruktiv einfache und werkzeuglose Kopplung der externen Saugeinheit, insbesondere eines Saugschlauchs der externen Saugeinheit, an dem Koppelmittel erreicht werden kann. Grundsätzlich sind jedoch auch weitere, dem Fachmann als sinnvoll erscheinende Befestigungsvarianten zwischen der externen Saugeinheit und dem Koppelmittel denkbar, wie beispielsweise ein einfaches Festklemmen der externen Saugeinheit am Koppelmittel usw.

Zudem wird vorgeschlagen, dass im Bereich der Schnittstelle wenigstens ein Staubrückhaltemittel angeordnet ist, wodurch eine besonders saubere und staubfreie Montage oder Demontage der externen Staubeinheit an bzw. von der Schnittstelle erzielt und ein Komfort der Staubabsaugadaptervorrichtung erhöht werden kann. Unter im "Bereich der Schnittstelle" soll insbesondere verstanden werden, dass das Staubrückhaltemittel im Bereich eines Koppelmittels, d.h. mit einem Abstand kleiner als eine Haupterstreckung des Koppelmittels zum Koppelmittel und/oder vorzugsweise zumindest teilweise innerhalb des Koppelmittels, angeordnet ist.

In einer weiteren Ausgestaltung der Erfindung wird vorgeschlagen, dass das Adapterelement einen Aufnahmebereich aufweist, so dass mittels des Aufnahmebereichs vorteilhaft weitere Funktionsmittel bzw. weitere Bauteile in die Staubabsaugadaptervorrichtung integriert werden können. Besonders vorteilhaft ist hierbei der Aufnahmebereich zur Aufnahme eines Filtermittels vorgesehen, wodurch ein besonders schnelles Umschalten zwischen der externen Saugeinheit und einer internen Saugeinheit für einen Bediener der Staubabsaugadaptervorrichtung ohne einen Wechsel der Adapterelemente erreicht werden kann.

Vorteilhafterweise umfasst die Staubabsaugadaptervorrichtung eine Sensoreinheit zu einer Sensierung einer Kenngröße der externen Saugeinheit, so dass eine zumindest teilautomatische Sensierung der externen Saugeinheit und/oder einer internen Saugeinheit erreicht werden kann. Zusätzlich zu einer Sensierung kann die Sensoreinheit vorteilhafterweise zu einem zumindest teilautomatischen Umschalten zwischen der externen und der internen Saugeinheit vorgesehen sein. Dabei kann unter einer "Sensoreinheit" eine Einheit verstanden werden, die sowohl zu einem reinen Sensieren einer Kenngröße vorgesehen ist, als auch eine Einheit, die weitere Bauteile, wie beispielsweise eine Steuereinheit, eine Regeleinheit und/oder eine Recheneinheit, beinhaltet. Zum Sensieren der internen und/oder der externen Saugeinheit kann die Sensoreinheit von einer mechanischen Sensoreinheit, einer optischen Sensoreinheit, einer elektronischen Sensoreinheit und/oder einer Sensoreinheit mit Drucksensoren usw. gebildet sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer Staubab- saugadaptervorrichtung und einer externen Saugeinheit in einer schematischen Darstel- lung,
- Fig. 2: einen Teilschnitt der Staubabsaugadaptervor- richtung aus Figur 1 mit einem eine Schnitt- stelle aufweisenden Adapterelement und
- Fig. 3: einen Teilschnitt der Staubabsaugadaptervor- richtung aus Figur 1 mit einem eine Schnitt- stelle und ein Filtermittel aufweisenden Adap- terelement.

### Beschreibung der Ausführungsbeispiele

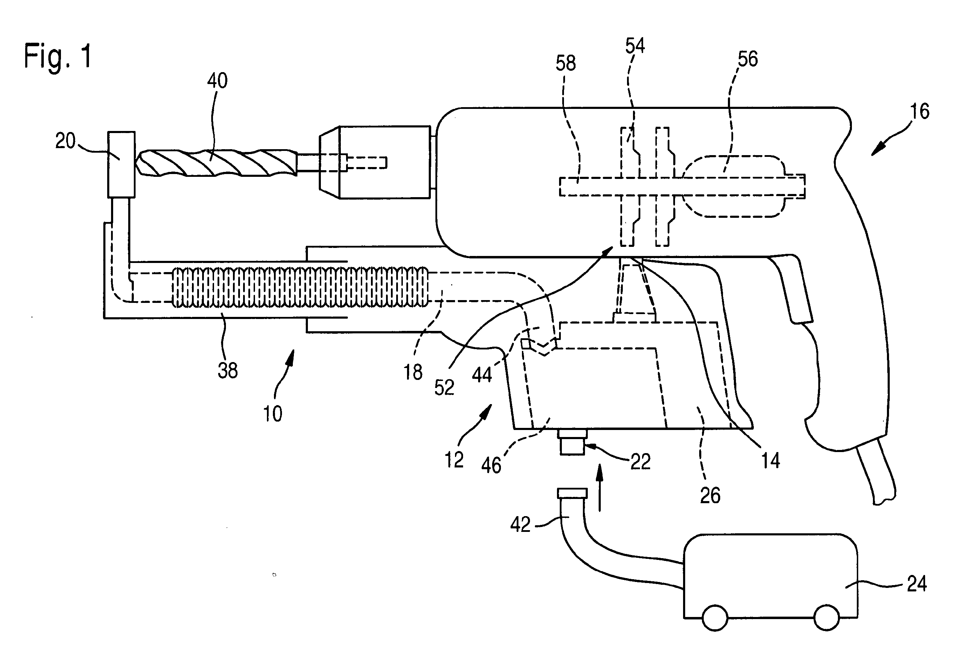

Figur 1 zeigt eine von einem Bohrhammer gebildete Handwerkzeugmaschine 16. An dem Bohrhammer ist eine abnehmbare Staubabsaugadaptervorrichtung 10 angebracht, die eine Grundkörpereinheit 12, einen in seiner Länge variablen Saugarm 38, der einen Absaugkanal 18 umfasst, und eine an den Saugarm 38 angebrachte Saugkopfeinheit 20 aufweist. Die Saugkopfeinheit 20 ist dabei kreisförmig um ein Bohrwerkzeug 40 der Handwerkzeugmaschine angeordnet. Die Grundkörpereinheit 12 umfasst einen Aufnahmebereich für ein Adapterelement 26. Ferner umfasst die Staubabsaugadaptervorrichtung 10 das Adapterelement 26 mit einer Schnittstelle 22 für eine externe Saugeinheit 24. Zudem weist die Grundkörpereinheit 12 eine Koppelstelle 14 auf, über die die Staubabsaugadaptervorrichtung 10 an die Handwerkzeugmaschine 16 gekoppelt ist. Die in Figur 1 nicht maßstabsgetreu dargestellte externe Saugeinheit 24 weist einen Saugschlauch 42 auf, mit dem die externe Saugeinheit 24 über die Schnittstelle 22 an die Staubabsaugadaptervorrichtung 10 gekoppelt ist.

Im Betrieb der Staubabsaugadaptervorrichtung 10 bzw. der Handwerkzeugmaschine 16 wird über die externe Saugeinheit 24 ein Luftsog in der Staubabsaugadaptervorrichtung 10 erzeugt. Der durch die externe Saugeinheit 24 erzeugte Luftsog führt zu einer Staubabsaugung an der Saugkopfeinheit 20. Über den von dem Saugarm 38 umfassten Absaugkanal 18 wird der abgesaugte Staub zur Grundkörpereinheit 12 transportiert. In der Grundkörpereinheit 12 wird der Staub über ein gekrümmtes Saugrohr 44 in den Aufnahmebereich zur Aufnahme eines Adapterelements 26 geführt. Innerhalb des Adapterelements 26 wird der Staub über einen Absaugkanal 46 zur Schnittstelle 22 für die externe Saugeinheit 24 geleitet und von der externen Saugeinheit 24 abgesaugt.

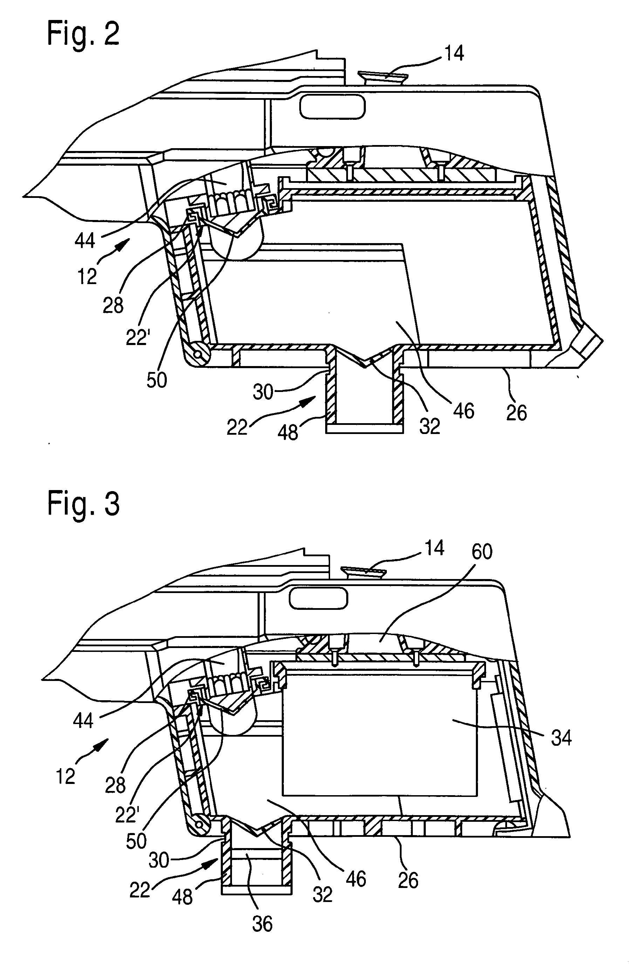

In Figur 2 ist ein Teilschnitt der Staubabsaugadaptervorrichtung 10 mit der Grundkörpereinheit 12 und dem Adapterelement 26 dargestellt. An einer der Grundkörpereinheit 12 abgewandten Seite des Adapterelements 26 weist dieses ein Koppelmittel 48 der Schnittstelle 22 für die externe Saugeinheit 24 auf, wobei das Koppelmittel 48 eine runde Querschnittsfläche aufweist. Das Koppelmittel 48 der Schnittstelle 22 für die externe Saugeinheit 24 ist zudem zylinderförmig ausgebildet und weist ein Rastmittel 30 auf. Das Rastmittel 30 wird von einer nutförmigen Aussparung gebildet, die in Umfangsrichtung um die zylinderförmige Schnittstelle 22 angeordnet ist. In die nutförmige Aussparung rastet im montierten Zustand ein Saugschlauch 42 der externen Saugeinheit 24 ein.

Um ein Herausfallen von Staub bei einer Demontage des Saugschlauchs 42 der externen Saugeinheit 24 von der Schnittstelle 22 bzw. dem Koppelmittel 48 zu verhindern, ist das Koppelmittel 48 mit einem Staubrückhaltemittel 32 versehen, das von einer Gummilasche gebildet ist. Die Gummilasche ist dabei im Wesentlichen senkrecht zum zylinderförmigen Koppelmittel 48 ausgerichtet und an einer der Grundkörpereinheit 12 zugewandten Seite des Koppelmittels 48 angeordnet. Grundsätzlich sind jedoch auch von weitere, dem Fachmann als sinnvoll erscheinenden Staubrückhaltemittel 32 denkbar, wie beispielsweise eine Rückhalteklappe usw. Ein Bereich des Adapterelements 26 zwischen einer Schnittstelle 22' zur Grundkörpereinheit 12 und der Schnittstelle 22 für die externe Saugeinheit 24 umfasst den Absaugkanal 46, über den der angesaugte Staub zur Schnittstelle 22 für die externe Saugeinheit 24 geleitet wird.

An der Schnittstelle 22' zwischen der Grundkörpereinheit 12 und dem Adapterelement 26 ragt das Saugrohr 44 des Grundkörpers 12 in das Adapterelement 26, wobei das Saugrohr 44 eine Verlängerung des Absaugkanals 18 des Saugarms 38 bildet. Bei einer entsprechenden Ausgestaltung des Saugschlauchs 42 der externen Saugeinheit 24 kann diese bereits über die Schnittstelle 22' an die Grundkörpereinheit 12 gekoppelt werden. Hierbei rastet der Saugschlauch 42 der externen Saugeinheit 24 mit an dem Saugschlauch 42 angeordneten Rastelementen, die nicht näher dargestellt sind, in Rastelemente 28, die im Bereich der Schnittstelle 22' der Grundkörpereinheit 12 angeordnet sind.

Das Adapterelement 26 weist im Bereich der Schnittstelle 22' zur Grundkörpereinheit 12 ein Staubrückhaltemittel 50 auf, das bei einem Ausbau des Adapterelements 26 ein unerwünschtes Herausfallen von Staub, der sich innerhalb des Absaugkanals 46 des Adapterelements 26 befinden kann, verhindert. Das Staubrückhaltemittel 50 wird von einer Gummilasche innerhalb des Saugrohrs 44 gebildet.

In Figur 3 ist ein Teilschnitt der Staubabsaugadaptervorrichtung 10 mit der Grundkörpereinheit 12 und einem weiteren Adapterelement 26 dargestellt. Das Adapterelement 26 umfasst neben der Schnittstelle 22 für die externe Saugeinheit 24 zudem eine Sensoreinheit 36 und einen Aufnahmebereich 34 für ein Filtermittel. Die Sensoreinheit 36 ist innerhalb des zylinderförmigen Koppelmittels 48 angeordnet und zu einem Sensieren einer Kenngröße vorgesehen. Die sensierte Kenngröße enthält Informationen über einen Anschlussstatus der externen Saugeinheit 24 an das Koppelmittel 48 der Schnittstelle 22 des Adapterelements 26. Hierzu umfasst die Sensoreinheit 36 ein nicht näher dargestelltes Sensormittel, das zur Sensierung der Kenngröße über einen von der externen Saugeinheit 24 erzeugten Luftsog vorgesehen ist und/oder das über einen Einrastmechanismus des Saugschlauchs 42 der externen Saugeinheit 24 an die Schnittstelle 22 die Kenngröße sensiert. Zudem umfasst die Sensoreinheit 36 eine nicht näher dargestellte Recheneinheit, die anhand der sensierten Kenngröße ein Umschalten zwischen einer internen Saugeinheit 52 (Figur 1) und der externen Saugeinheit 24 ermöglicht. Sobald im Betrieb der Handwerkzeugmaschine 16 bzw. der Staubabsaugadaptervorrichtung 10 von einem Bediener der Handwerkzeugmaschine 16 die externe Saugeinheit 24 an das Adapterelement 26 gekoppelt wird, wird dies von der Sensoreinheit 36 erkannt und die interne Saugeinheit 52 abgeschaltet bzw. die interne Saugeinheit 52 wird von der Sensoreinheit 36 eingeschaltet, sobald die externe Saugeinheit 24 von der Schnittstelle 22 abgekoppelt wird. Hierzu ist die Sensoreinheit 36 über eine nicht näher dargestellte interne Datenleitung mit der internen Saugeinheit 52 verbunden.

Die interne Saugeinheit 52 ist innerhalb der Handwerkzeugmaschine 16 angeordnet, die einen zusätzlichen Lüfter 54 und eine nicht näher dargestellte Kupplung umfasst (Figur 1). Der zusätzliche Lüfter 54 wird in der Handwerkzeugmaschine 16 von einer Antriebseinheit 56 über eine Antriebswelle 58 angetrieben, die mit dem zusätzlichen Lüfter 54 über die Kupplung koppelbar ist (Figur 1). Wird von der Sensoreinheit 36 die externe Saugeinheit 24 erkannt, so wird mittels der Kupplung der Lüfter 54 von der Antriebswelle 58 entkoppelt bzw. der Lüfter 54 wird über die Kupplung mit der Antriebswelle 58 gekoppelt, nachdem die Sensoreinheit 36 ein Abkoppeln der externen Saugeinheit 24 von der Schnittstelle 22 sensiert hat.

Über die Koppelstelle 14 wird im Betrieb der Handwerkzeugmaschine 16 und der internen Saugeinheit 52 in der Staubabsaugadaptervorrichtung 10 mittels des zusätzlichen Lüfters 54 ein Luftsog erzeugt. Dazu ist die Koppelstelle 14 der Staubabsaugadaptervorrichtung 10 mit einer nicht näher dargestellten Öffnung versehen, mittels der der Luftsog vom Lüfter 54 abgesaugt wird. Zu einer Staubabscheidung wird der Luftsog innerhalb des Adapterelements 26 durch den Aufnahmebereich 34 für das Filtermittel geleitet. Der Aufnahmebereich 34 für das Filtermittel ist zur Aufnahme für das von einem Plattenfilter gebildete Filtermittel vorgesehen. Nach Verlassen des Plattenfilters wird im Betrieb der Handwerkzeugmaschine 16 die von Staub gereinigte Luft über einen Absaugkanal 60 der Grundkörpereinheit 12 und über die anschließende Koppelstelle 14 vom zusätzlichen Lüfter 54 der internen Saugeinheit 52 angesaugt und entweicht dort über nicht näher dargestellte Lüftungsöffnungen.

Der Aufnahmebereich des Grundkörpers 12 ist zur Aufnahme unterschiedlicher Adapterelemente 26 vorgesehen. Ein Wechsel der Adapterelemente 26 bzw. ein Einbau und/oder ein Ausbau des Adapterelements 26 erfolgt werkzeuglos an der Grundkörpereinheit 12. Hierzu weist das Adapterelement 26 die Rastelemente 28 auf, die im Bereich der Schnittstelle 22' zur Grundeinheit 12 angeordnet sind. Über ein nicht näher dargestelltes Betätigungselement werden bei einem Wechsel und/oder einem Ausbau des Adapterelements 26 die Rastelemente 28 von der Grundeinheit 12 entriegelt und das Adapterelement wird von einem Bediener der Staubabsaugadaptervorrichtung (10) entnommen.

## Patentansprüche

1. Staubabsaugadaptervorrichtung mit einer Grundkörpereinheit (12), die eine Koppelstelle (14) zur Ankopplung an eine Handwerkzeugmaschine (16) und wenigstens einen Absaugkanal (18) aufweist, einer an der Grundkörpereinheit (12) beweglichen Saugkopfeinheit (20), wobei der Absaugkanal (18) zwischen der Grundkörpereinheit (12) und der Saugkopfeinheit (20) angeordnet ist, mit wenigstens einer Schnittstelle (22) für eine externe Saugeinheit (24) und einem Adapterelement (26), das die Schnittstelle (22) für die externe Saugeinheit (24) aufweist, wobei die Grundkörpereinheit (12) im Inneren einen Aufnahmebereich umfasst, der zu einer Aufnahme des Adapterelements (26) vorgesehen ist, **dadurch gekennzeichnet, dass** die Grundkörpereinheit (12) einen Aufnahmebereich für das Adapterelement (26) umfasst, der sowohl zur Aufnahme des Adapterelements (26) für die externe Saugeinheit (24) als auch zur Aufnahme für ein Adapterelement (26) vorgesehen ist, das ein Filtermittel aufweist und für eine interne Staubabsaugung vorgesehen ist.

2. Staubabsaugadaptervorrichtung nach Anspruch 1, **dadurch gekennzeichnet, dass** die Grundkörpereinheit (12) die Schnittstelle (22') für die externe Saugeinheit (24) umfass

3. Staubabsaugadaptervorrichtung nach einem der vorhergehenden Ansprüche, **dadurch gekennzeichnet, dass** der Aufnahmebereich ein Rastelement (28) aufweist, das zum Einrasten des Adapterelements (26) vorgesehen isL.

4. Staubabsaugadaptervorrichtung nach einem der vorhergehenden Ansprüche, **dadurch gekennzeichnet, dass** ein KoppelmiLLcl (48) der Schnittstelle (22) eine runde Querschnittsfläche aufweist.

5. Staubabsaugadaptervorrichtung nach Anspruch 4 **dadurch gekennzeichnet, dass** das Koppelmittel (48) der Schnittstelle (22) wenigstens ein Rastmittel (30) aufweist.

6. Staubabsaugadaptervorrichtung nach einem der vorhergehenden Ansprüche, **dadurch gekennzeichnet, dass** im Bereich der Schnittstelle (22) wenigstens ein Staubrückhallemittel (32) angeordnet ist.

7. Staubabsaugadaptervorrichtung nach einem der vorhergehenden Ansprüche, **dadurch gekennzeichnet, dass** das Adapterelement (26) einen Aufnahmebereich (34) aufweist.

8. Staubabsaugadaptervorrichtung nach Anspruch 7, **dadurch gekennzeichnet, dass** der Aufnahmebereich (34) zur Aufnahme eines Filtermittels vorgesehen list.

9. Staubabsaugadaptervorrichtung nach einem der vorhergehenden Ansprüche, **gekennzeichnet durch** eine Sensoreinheit (36) zu einer Sensierung einer Kenngröße der externen Saugeinheit (24).

## Claims

1. Dust extraction adapter device comprising a basic-body unit (12), which has a coupling point (14) for coupling to a portable power tool (16) and at least one extraction passage (18), and a suction-head unit (20) which is movable on the basic-body unit (12), wherein the extraction passage (18) is arranged between the basic-body unit (12) and the suction-head unit (20), and comprising at least one interface (22) for an external suction unit (24) and an adapter element (26) which has the interface (22) for the external suction unit (24), wherein the basic-body unit (12) comprises, in the interior, an accommodating region which is provided for accommodating the adapter element (26), **characterized in that** the basic-body unit (12) comprises an accommodating region for the adapter element (26), said accommodating region being provided both for accommodating the adapter element (26) for the external suction unit (24) and for accommodating an adapter element (26) which has a filter medium and is provided for internal dust extraction.

2. Dust extraction adapter device according to Claim 1, **characterized in that** the basic-body unit (12) comprises the interface (22') for the external suction unit (24).

3. Dust extraction adapter device according to either of the preceding claims, **characterized in that** the accommodating region has a latching element (28) which is provided for latching the adapter element (26) in place.

4. Dust extraction adapter device according to one of the preceding claims, **characterized in that** a coupling means (48) of the interface (22) has a round cross-sectional area.

5. Dust extraction adapter device according to Claim 4, **characterized in that** the coupling means (48) of the interface (22) has at least one latching means (30).

6. Dust extraction adapter device according to one of the preceding claims, **characterized in that** at least one dust retention means (32) is arranged in the region of the interface (22).

7. Dust extraction adapter device according to one of the preceding claims, **characterized in that** the adapter element (26) has an accommodating region (34).

8. Dust extraction adapter device according to Claim 7, **characterized in that** the accommodating region (34) is provided for accommodating a filter medium.

9. Dust extraction adapter device according to one of the preceding claims, **characterized by** a sensor unit (36) for sensing a parameter of the external suction unit (24).

## Revendications

1. Dispositif adaptateur pour l'aspiration des poussières, comprenant une unité de corps de base (12), qui présente un point d'accouplement (14) pour l'accouplement à une machine-outil portative (16) et au moins un conduit d'aspiration (18), une unité de tête d'aspiration (20) mobile sur l'unité de corps de base (12), le conduit d'aspiration (18) étant disposé entre l'unité de corps de base (12) et l'unité de tête d'aspiration (20), au moins une interface (22) pour une unité d'aspiration externe (24) et un élément d'adaptateur (26), qui présente l'interface (22) pour l'unité d'aspiration externe (24), l'unité de corps de base (12) comprenant à l'intérieur une région de réception qui est prévue pour recevoir l'élément d'adaptateur (26), **caractérisé en ce que** l'unité de corps de base (12) comprend une région de réception pour l'élément d'adaptateur (26), qui est prévue à la fois pour recevoir l'élément d'adaptateur (26) pour l'unité d'aspiration externe (24) et pour recevoir également un élément d'adaptateur (26) qui présente un moyen de filtre et qui est prévu pour une aspiration des poussières interne.

2. Dispositif adaptateur pour l'aspiration des poussières selon la revendication 1, **caractérisé en ce que** l'unité de corps de base (12) comprend l'interface (22') pour l'unité d'aspiration externe (24).

3. Dispositif adaptateur pour l'aspiration des poussières selon l'une quelconque des revendications précédentes, **caractérisé en ce que** la région de réception présente un élément d'encliquetage (28) qui est prévu pour encliqueter l'élément d'adaptateur (26).

4. Dispositif adaptateur pour l'aspiration des poussières selon l'une quelconque des revendications précédentes, **caractérisé en ce qu'**un moyen d'accouplement (48) de l'interface (22) présente une surface de section transversale circulaire.

5. Dispositif adaptateur pour l'aspiration des poussières selon la revendication 4, **caractérisé en ce que** le moyen d'accouplement (48) de l'interface (22) présente au moins un moyen d'encliquetage (30).

6. Dispositif adaptateur pour l'aspiration des poussières selon l'une quelconque des revendications précédentes, **caractérisé en ce qu'**au moins un moyen de retenue des poussières (32) est disposé dans la région de l'interface (22).

7. Dispositif adaptateur pour l'aspiration des poussières selon l'une quelconque des revendications précédentes, **caractérisé en ce que** l'élément d'adaptateur (26) présente une région de réception (34).

8. Dispositif adaptateur pour l'aspiration des poussières selon la revendication 7, **caractérisé en ce que** la région de réception (34) est prévue pour recevoir un moyen de filtre.

9. Dispositif adaptateur pour l'aspiration des poussières selon l'une quelconque des revendications précédentes, **caractérisé par** une unité de capteur (36) pour détecter une valeur caractéristique de l'unité d'aspiration externe (24).
